# EUROPEAN PATENT APPLICATION

(11) **EP 4 613 793 A1**
(43) Date of publication of application: **10.09.2025**
(21) Application number: 23885545.6
(22) Date of filing: 19.10.2023
(51) Int. Cl.: C08G 63/672

(54) **POLYESTER ELASTOMER DERIVED FROM BIOMASS RESOURCES**

(30) Priority: 02.11.2022 JP 2022176687
(71) Applicant: TOYOBO MC Corporation, Osaka 530-0001 (JP)
(72) Inventor: SUMINO, Shogo, Otsu-shi, Shiga 520-0292 (JP); AKAISHI, Takuya, Otsu-shi, Shiga 520-0292 (JP); TAMASHIRO, Yuki, Otsu-shi, Shiga 520-0292 (JP)
(74) Representative: Vossius & Partner Patentanwälte Rechtsanwälte mbB
(86) International application number: PCT/JP2023/037833
(87) International publication number: WO 2024/095783

(57) **Abstract**

The present invention provides a biomass resource-derived polyester elastomer that, is not colored, and can retain excellent mechanical characteristics, retention stability, water aging resistance, and heat aging resistance exhibited by a fossil fuel resource-derived polyester elastomer. A biomass resource-derived polyester elastomer comprising a hard segment and a soft segment bonded with each other, wherein the hard segment consists of a polyester that contains, as constituent components, an aromatic dicarboxylic acid and an aliphatic and/or alicyclic diol, and the soft segment contains, as constituent components, an aromatic dicarboxylic acid and an aliphatic polyether, wherein the aromatic dicarboxylic acid and the aliphatic and/or alicyclic diol are derived from a fossil fuel resource, and the aliphatic polyether is derived from a biomass resource, wherein the polyester elastomer has a biobase degree of 20 to 85%, and wherein the polyester elastomer has a reduced viscosity of 1.2 dl/g or more.

## Description

### Technical Field of the Invention

The present invention relates to a biomass resource-derived polyester elastomer that, despite having a high biobase degree, is not colored, and can retain excellent mechanical characteristics, retention stability, water aging resistance, and heat aging resistance exhibited by a fossil fuel resource-derived polyester elastomer.

### Background Art

Polyester elastomers are used as materials having excellent injection moldability and extrusion moldability, high mechanical strength, excellent rubbery properties, such as elastic resilience, impact resistance, and flexibility, and excellent heat resistance and cold resistance, and used for a wide range of applications such as automobile parts, electric or electronic parts, fibers, films, and sport parts.

Various types of polymers are being made from biomass due to the background of worldwide environmental problems such as a recent concern about depletion of fossil fuel resources and the increase of carbon dioxide in the air. Biomass resources are renewable resources and are therefore considered to become an important design concept in the future polymer development, from the viewpoint of SDGs (Sustainable Development Goals) and carbon neutrality.

However, since biomass resource-derived raw materials contain impurities that have not completely been removed in a purifying step, increasing the proportion of a biomass resource-derived raw material so as to increase the biobase degree in the polyester causes an increase in the amount of impurities, resulting in inhibition of a reaction, whereby increase of reduced viscosity tends to be inhibited. Therefore, it has been difficult to make the polyester have the excellent characteristics of a fossil fuel resource-derived polyester.

To deal with this problem, proposed is reducing the content of sulfur atoms and the amount of acid end groups in a polyester that contains, as a raw material, a dicarboxylic acid and/or a diol of a biomass resource-derived raw material, and thus preventing the decrease of the mechanical characteristics of the polyester (see Patent Document 1). This biomass resource-derived polyester somewhat prevents the decrease of the mechanical characteristics, but there has been a problem of causing coloring of the polyester and deteriorating the appearance of the molded article. In addition, the biomass resource-derived polyester has not been able to maintain the excellent characteristics of a fossil fuel resource-derived polyester in terms of retention stability, water aging resistance, and heat aging resistance.

### Prior Art Documents

### Patent Documents

Patent Document 1: Japanese Patent No. 5303237

### Disclosure of the Invention

### Problem that the Invention is to Solve

The present invention has been conceived of in view of the present state of this conventional technique. An object of the present invention is to provide a biomass resource-derived polyester elastomer that, despite having the usage proportion of a biomass resource-derived raw material increased in the polyester elastomer, is not colored, and can retain excellent mechanical characteristics, retention stability, water aging resistance, and heat aging resistance exhibited by a fossil fuel resource-derived polyester elastomer.

### Means for Solving the Problem

The inventors of the present invention have earnestly studied to achieve this object, and, as a result, found that by using a fossil fuel resource-derived material for an aromatic dicarboxylic acid component and an aliphatic and/or alicyclic diol of a polyester constituting a hard segment of a polyester elastomer, and using a biomass resource-derived material for an aliphatic polyether between an aromatic dicarboxylic acid and the aliphatic polyether constituting a soft segment of the polyester elastomer, it is possible to provide a biomass resource-derived polyester elastomer that can retain excellent mechanical characteristics, retention stability, water aging resistance, and heat aging resistance exhibited by a fossil fuel resource-derived polyester elastomer, and is not colored. The inventors of the present invention have thus completed the present invention.

Specifically, the present invention encompasses the following configurations (1) to (6).
(1) A biomass resource-derived polyester elastomer comprising a hard segment and a soft segment bonded with each other, wherein the hard segment consists of a polyester that contains, as constituent components, an aromatic dicarboxylic acid and an aliphatic and/or alicyclic diol, and the soft segment contains, as constituent components, an aromatic dicarboxylic acid and an aliphatic polyether, wherein the aromatic dicarboxylic acid and the aliphatic and/or alicyclic diol are derived from a fossil fuel resource, and the aliphatic polyether is derived from a biomass resource, wherein the polyester elastomer has a biobase degree of 20 to 85%, and wherein the polyester elastomer has a reduced viscosity of 1.2 dl/g or more.
(2) The biomass resource-derived polyester elastomer according to (1), wherein the aliphatic polyether that is derived from the biomass resource is polytetramethylene ether glycol.
(3) The biomass resource-derived polyester elastomer according to (1) or (2), wherein the polyester elastomer has a glass transition temperature (Tg) of -70 to 10°C.
(4) The biomass resource-derived polyester elastomer according to (1) or (2), wherein the polyester elastomer has a Co-b value of 7 or less.
(5) The biomass resource-derived polyester elastomer according to (1) or (2), wherein the polyester elastomer has a biobase degree of 35 to 85%, and wherein the polyester elastomer has a reduced viscosity of 1.8 dl/g or more.
(6) The biomass resource-derived polyester elastomer according to (1) or (2), wherein the hard segment of the polyester elastomer is a polyester consisting of a butylene terephthalate unit.

### Effects of the Invention

The biomass resource-derived polyester elastomer according to the present invention can, despite having the usage proportion of a biomass resource-derived raw material increased therein, be prevented from being colored, and can retain excellent mechanical characteristics, retention stability, water aging resistance, and heat aging resistance exhibited by a fossil fuel resource-derived polyester elastomer. Therefore, the biomass resource-derived polyester elastomer according to the present invention can greatly contribute to resolution of world environmental problems such as a problem of depletion of fossil fuel resources.

### Mode for Carrying Out the Invention

The biomass resource-derived polyester elastomer according to the present invention comprises a hard segment and a soft segment bonded with each other, wherein the hard segment consists of a polyester that contains, as constituent components, an aromatic dicarboxylic acid and an aliphatic and/or alicyclic diol, and the soft segment contains, as constituent components, an aromatic dicarboxylic acid and an aliphatic polyether, and is characterized in that the aromatic dicarboxylic acid and the aliphatic and/or alicyclic diol are derived from a fossil fuel resource, and the aliphatic polyether is derived from a biomass resource.

As to the aromatic dicarboxylic acid constituting the polyester of the hard segment, a wide range of ordinary aromatic dicarboxylic acids are used, but terephthalic acid or a naphthalene dicarboxylic acid (among isomers thereof, 2,6-naphthalene dicarboxylic acid is preferred) is preferred as a main aromatic dicarboxylic acid. The content of these aromatic dicarboxylic acids is preferably 70 mol% or more, more preferably 80 mol% or more, further preferably 90 mol% or more, and may be 100 mol% in all the dicarboxylic acids constituting the polyester of the hard segment. Examples of a dicarboxylic acid component other than the terephthalic acid and the naphthalene dicarboxylic acid include: aromatic dicarboxylic acids such as a diphenyl dicarboxylic acid, isophthalic acid, and 5-sodium sulfoisophthalic acid; alicyclic dicarboxylic acids such as a cyclohexane dicarboxylic acid and tetrahydrophthalic anhydride; and aliphatic dicarboxylic acids such as succinic acid, glutaric acid, adipic acid, azelaic acid, sebacic acid, dodecanedioic acid, dimer acid, and hydrogenated dimer acid. These acids can be used in such an extent that does not greatly lower the melting point of the resin, and the amount of these acids is preferably 30 mol% or less, more preferably 20 mol% or less, further preferably 10 mol% or less, and may be 0 mol% in all the acid components. When used as a raw material of the polyester elastomer, these dicarboxylic acids may be ester forms of the dicarboxylic acids. For example, as a raw material, terephthalic acid is usable, and dimethyl terephthalate is also usable.

As to the aliphatic or alicyclic diol constituting the polyester of the hard segment, a wide range of general aliphatic or alicyclic diols are used without any particular limitation, but it is preferred that the aliphatic or alicyclic diol is mainly an alkylene glycol having 2 to 8 carbon atoms. Specific examples of the alkylene glycol include ethylene glycol, 1,3-propylene glycol, 1,4-butanediol, 1,6-hexanediol, and 1,4-cyclohexanedimethanol. Among these examples, either ethylene glycol or 1,4-butanediol is preferred.

As to a component constituting the polyester of the hard segment, a butylene terephthalate unit (a unit formed of terephthalic acid and 1,4-butanediol) or a butylene naphthalate unit (a unit formed of 2,6-naphthalene dicarboxylic acid and 1,4-butanediol) is preferred in terms of physical properties, moldability, and cost performance.

When an aromatic polyester suitable for the polyester constituting the hard segment of the polyester elastomer is produced in advance, and thereafter copolymerized with a soft segment component, the aromatic polyester can easily be obtained according to an ordinary method for producing a polyester. The polyester preferably has a number average molecular weight of 10000 to 40000.

As to the aromatic dicarboxylic acid constituting the soft segment of the polyester elastomer, the aromatic dicarboxylic acid constituting the polyester of the hard segment is usable. In a preferred aspect, the aromatic dicarboxylic acid as a constituent component of the soft segment and the aromatic dicarboxylic acid as a constituent component of the hard segment are the same.

The aliphatic polyether constituting the soft segment of the polyester elastomer is preferably a glycol compound due to being bonded with the polyester of the hard segment. Specific examples of the glycol compound include poly(ethylene oxide)glycol, poly(propylene oxide)glycol, polytetramethylene ether glycol, polytrimethylene ether glycol, poly(hexamethylene oxide)glycol, a copolymer of ethylene oxide and propylene oxide, an ethylene oxide adduct of poly(propylene oxide)glycol, and a copolymer of ethylene oxide and tetrahydrofuran. Among these examples, polytetramethylene ether glycol and an ethylene oxide adduct of poly(propylene oxide)glycol are preferred in terms of elastic characteristics.

In the present invention, it is preferable to use, as the aliphatic polyether that is a constituent component of the soft segment, a biomass resource-derived material, particularly, biomass resource-derived polytetramethylene ether glycol (PTMG). As to this PTMG, a commercially available product can be obtained and used, and, for example, BioPTMG1000 and BioPTMG2000 manufactured by Mitsubishi Chemical Group Corporation are preferably used.

The polyester elastomer is preferably a copolymer containing, as main components, terephthalic acid, 1,4-butanediol, and polytetramethylene ether glycol. In the dicarboxylic acid component constituting the polyester elastomer, the terephthalic acid is preferably 40 mol% or more, more preferably 70 mol% or more, further preferably 80 mol% or more, and especially preferably 90 mol% or more. In the glycol component constituting the polyester elastomer, the total of the 1,4-butanediol and the polytetramethylene ether glycol is preferably 40 mol% or more, more preferably 70 mol% or more, further preferably 80 mol% or more, and especially preferably 90 mol% or more.

The polytetramethylene ether glycol preferably has a number average molecular weight of 500 to 4000, more preferably 700 to 3000, and further preferably 800 to 2500. The polytetramethylene ether glycol having a number average molecular weight of less than the above range sometimes makes it difficult for the resulting polyester elastomer to exert elastomer characteristics. On the other hand, the polytetramethylene ether glycol having a number average molecular weight of more than the above range has lower compatibility with the hard segment component, sometimes making it difficult to achieve block copolymerization.

The mass of the hard segments in the present invention refers to the component mass of the aromatic dicarboxylic acid and the aliphatic and/or alicyclic diol, and the mass of the soft segments refers to the component mass of the aromatic dicarboxylic acid and the aliphatic polyether. For example, when the polyester elastomer is prepared from terephthalic acid and 1,4-butanediol, and polytetramethylene ether glycol (PTMG), the mass of the hard segments is the mass of butylene terephthalate units (condensation units of terephthalic acid and 1,4-butanediol), and the mass of the soft segments is the mass of condensation units of terephthalic acid and polytetramethylene ether glycol (PTMG).

The polyester elastomer preferably has a mass ratio of hard segment/soft segment of 5/95 to 90/10, more preferably 10/90 to 85/15, and further preferably 15/85 to 80/20. When the amount of the hard segments is small (the amount of PTMG is large), the polyester elastomer cannot sometimes satisfy its functions of heat aging resistance and moldability (crystallinity). In contrast, when the amount of the hard segments is large (the amount of PTMG is small), the compatibility between the hard segment component and the soft segment component is lowered, sometimes making it difficult to achieve block copolymerization.

The polyester elastomer preferably has a melting point of 150 to 230°C. The polyester elastomer having a melting point of lower than 150°C cannot sometimes satisfy its functions of heat aging resistance and moldability (crystallinity). In contrast, the polyester elastomer having a melting point of higher than 230°C has, due to containing large amount of hard segments, a higher glass transition temperature (Tg) accordingly, and cannot sometimes satisfy its functions of impact resilience, flexibility, and a low-temperature mechanical characteristic.

In order to produce the polyester elastomer according to the present invention, the polycondensation time is preferably set longer than the conventional polycondensation time. Ordinarily, the polycondensation time in the production of a polyester elastomer is about 50 to 90 minutes, but, in the present invention, the polycondensation time is preferably 100 to 140 minutes, and more preferably 105 to 135 minutes. The temperature of the polycondensation is preferably controlled in a narrow range. Ordinarily, the temperature of the polycondensation in the production of a polyester elastomer is about 235 to 260°C, but, in the present invention, the temperature of the polycondensation is preferably 235 to 255°C, and more preferably 240 to 250°C. When the polycondensation time is short or the temperature of the polycondensation is low, the reduced viscosity of the polyester elastomer is not increased, and the polyester elastomer cannot sometimes satisfy its functions of elongation at break and tensile strength at break. In contrast, when the polycondensation time is long or the temperature of the polycondensation is high, coloring of the polyester elastomer may possibly occur, causing deterioration of the appearance, or a decrease of the reduced viscosity attributed to thermal degradation may possibly be caused.

The polyester elastomer according to the present invention has a biobase degree of 20 to 85%, preferably 30 to 85%, and more preferably 35 to 85%. The biomass resource-derived raw materials contain impurities that have not completely been removed in a purifying step. Therefore, conventionally, increasing the proportion of a biomass raw material so as to increase the biobase degree causes an increase in the amount of impurities, leading to inhibition of a reaction, whereby increase of reduced viscosity tends to be inhibited. Therefore, the polymerization time needs to be prolonged, whereby causing the problem of coloring. Therefore, it has been difficult to obtain, without decreasing the production efficiency, a biomass resource-derived polyester elastomer which can retain excellent flexibility, low-temperature mechanical characteristic, heat aging resistance, and water resistance, while preventing coloring. To deal with the difficulty, the inventors of the present invention have earnestly studied polymerization raw materials for polyester elastomers, and, as a result, succeeded in obtaining a biomass resource-derived polyester elastomer that is not colored and can retain excellent characteristics exhibited by a fossil fuel resource-derived polyester elastomer, by using a fossil fuel resource-derived material for the hard segment, and using an aliphatic polyether as a biomass resource-derived raw material only for the soft segment, and by employing a reaction time and a temperature appropriate for polycondensation.

As to a characteristic of the polyester elastomer according to the present invention, the reduced viscosity (ηsp/c) that serves as an index of molecular weight is very important. In the present invention, in order to exert long-term durability (heat aging resistance, water resistance), the polyester elastomer has reduced viscosity of 1.2 dl/g or more, preferably 1.3 dl/g or more, more preferably 1.4 dl/g or more, and further preferably 1.8 dl/g or more. The polyester elastomer having a low reduced viscosity (ηsp/c) has a small molecular weight, and therefore the polyester elastomer cannot sometimes satisfy its function of long-term durability (heat aging resistance, water resistance).

As to a characteristic of the polyester elastomer according to the present invention, the glass transition temperature (Tg) that serves as an index of the low-temperature mechanical characteristic is important. The glass transition temperature varies according to the proportion of the soft segments in the polyester elastomer. In the present invention, in order to exert functions of impact resilience, flexibility, and low-temperature mechanical characteristic, the polyester elastomer preferably has a glass transition temperature of -70 to 10°C, and more preferably -65 to 10°C. The polyester elastomer having a high glass transition temperature cannot sometimes satisfy its functions of impact resilience, flexibility, and low-temperature mechanical characteristic.

As to a characteristic of the polyester elastomer according to the present invention, the Co-b value that serves as an index of appearance of a molded article is important. The Co-b value varies according to the impurities in the biomass resource-derived raw material and the polymerization conditions. In the present invention, in order to obtain good appearance, the polyester elastomer preferably has a Co-b of 10 or less, more preferably 7 or less, and further preferably 4 or less. When the polyester elastomer has a high Co-b, pellets thereof prepared are yellowed, greatly damaging the appearance of a molded article, and therefore, the polyester elastomer is not sometimes satisfying.

As to a method for determining the composition and the composition ratio of the polyester elastomer according to the present invention, it is possible to use calculation based on the integral ratio of protons in ¹H-NMR measured by using a sample dissolved in a solvent such as deuterated chloroform.

### Examples

Examples are described below so as to verify the effects of the present invention. However, these examples are not to limit the present invention at all. The evaluation of characteristic values was performed according to the following methods. The raw materials used in the examples and the materials that are not particularly specified are derived from fossil fuel resources.

### (1) Reduced viscosity (ηsp/c)

The reduced viscosity was measured at 30°C by dissolving 0.05 g of a polyester elastomer in 25 mL of a mixed solvent (phenol/tetrachloroethane = 60/40), and using an Ubbelohde viscometer.

### (2) Melting point (Tm)

Using differential scanning calorimeter "DSC 220 type" manufactured by Seiko Instruments & Electronics Ltd., 5 mg of a measurement sample was put in an aluminum pan, hermetically sealed with a lid, melted at 250°C for 2 minutes in nitrogen, then cooled to 50°C at a cooling rate of 20°C/min, and further heated from 50°C to 250°C at 20°C/min. The endothermic peak attributed to melting in the thermogram curve obtained was defined as the melting point.

### (3) Glass transition temperature (Tg)

Dynamic viscoelasticity measuring instrument Rheogel-E4000 (manufactured by Kabushiki Kaisha UBM) was used. A 0.4-mm-thick sheet was made as a measurement sample by pressing a polyester elastomer with hot plates heated to 200 to 250°C of a NF-type single-acting compression molding machine (Shinto Metal Industries, Ltd.). The position of a peak of tan δ was defined as Tg, the tan δ being measured from -150°C to 150°C under the conditions of a measurement frequency of 11 Hz and a heating rate of 2°C/min.

### (4) Acid value (AV)

A sample in an amount of 0.2 g was precisely weighed, had benzyl alcohol added thereto, and was heated and melted. The resultant product was dissolved in 20 ml of chloroform, a 0.08 N ethanol solution of potassium hydroxide was titrated thereto. The acid value was obtained from the titer of potassium hydroxide required for neutralization. A phenol red ethanol solution was used as an indicator.

### (5) Color difference

The Co-b value (the greater the value is, the yellower) was measured with an automatic color difference meter (manufactured by Toyo Rika Kogyo Kabushiki Kaisha).

### (6) Retention stability (ΔMFR)

The pellets of the polyester elastomer composition obtained in each of the examples and comparative examples were retained at 190°C (Examples 2 to 4, Reference Examples 2 to 4, Comparative Example 4) or at 230°C (Examples 1, 5, and 6, Reference Examples 1, 5, and 6, Comparative Examples 1 to 3) for 25 minutes in accordance with a test method (method A) stipulated in JIS K7210. Then, the melt flow rate (MFR: g/10 min) was measured at 2160 g. The composition used for the measurement had a moisture percentage of 0.1 mass% or less.

### (7) Tensile elongation and strength at break

The tensile elongation and strength at break of a polyester elastomer were measured in accordance with JIS K6251. A test piece was produced by injection-molding a resin, which had been dried under reduced pressure at 100°C for 5 hours, into a 100 mm × 100 mm × 2 mm flat plate with an injection molder (model-SAV manufactured by Sanjo Seiki Co., Ltd.) at a cylinder temperature of (Tm + 20°C) and a mold temperature of 30°C, and then punching the flat plate into the shape of dumbbell type 3.

### (8) Water aging resistance (the treatment time required until a retention rate of elongation at break after a water aging resistance test becomes 50%)

A test piece was treated in 100°C boiling water and then measured for elongation at break by the method described above. A test piece not treated in boiling water was also measured for elongation at break. The retention rate of elongation at break after the boiling-water treatment was calculated as follows. The initial elongation at break is elongation at break before the boiling-water treatment. Retention rate (%) of elongation at break = (Elongation at break after boiling-water treatment/Initial elongation at break) × 100

The measurement was performed by defining, as a half-life of elongation, the boiling-water treatment time when the retention rate of elongation at break became 50%.

### (9) Heat aging resistance (the treatment time required until a retention rate of elongation at break after a heat aging resistance test becomes 50%)

A test piece was treated in the air at 140°C and then measured for elongation at break by the method described above. A test piece not heat-treated was also measured for elongation at break. The retention rate of elongation at break after the heat treatment was calculated as follows. The initial elongation at break is elongation at break before the heat treatment. Retention rate (%) of elongation at break = (Elongation at break after heat treatment/Initial elongation at break) × 100

The measurement was performed by defining, as a half-life of elongation, the heat treatment time when the retention rate of elongation at break became 50%.

### (10) Biobase degree

The biobase degree is the rate of a biomass resource-derived monomer component calculated from the mass of the biomass resource-derived monomer component with respect to the mass of all the monomer components constituting the polyester elastomer. The biobase degree is consistent with the value obtained by measuring the rate of ¹⁴C carbon (isotope of ¹²C carbon) contained only in a biomass resource-derived raw material with respect to all the carbon atoms contained in the polyester elastomer. The biobase degree of the polyester elastomer is measured by an accelerator mass spectrometry (AMS) on the basis of ASTM D6866.

### Example 1

Into an autoclave, 2000 g of dimethyl terephthalate (DMT manufactured by SK PetroChemical Limited), 1360 g of 1,4-butanediol (1,4-BDO manufactured by Mitsubishi Chemical Group Corporation), 750 g of biomass resource-derived polytetramethylene ether glycol (BioPTMG1000, number average molecular weight 1000, manufactured by Mitsubishi Chemical Group Corporation), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 150 minutes so as to perform a transesterification reaction. Next, the can had the pressure therein gradually reduced, and was further heated so that a state of 245°C and 1 Torr or less was realized over 75 minutes so as to perform an initial condensation reaction. Further, a polymerization reaction was performed for 135 minutes in the state of 245°C and 1 Torr or less. Then, pellets of a polymer having a mass ratio of hard segment/soft segment of 72/28 (mass%) were taken out. The obtained polymer was used as a polyester elastomer of Example 1.

### Example 2

Into an autoclave, 1200 g of dimethyl terephthalate (DMT manufactured by SK PetroChemical Limited), 800 g of 1,4-butanediol (1,4-BDO manufactured by Mitsubishi Chemical Group Corporation), 1780 g of biomass resource-derived polytetramethylene ether glycol (BioPTMG1000, number average molecular weight 1000, manufactured by Mitsubishi Chemical Group Corporation), 2.4 g of tetrabutyl titanate (TBT manufactured by NACALAI TESQUE, INC.), and 6.0 g of AO-330 (manufactured by ADEKA CORPORATION) were charged, and heated from room temperature to 200°C over 165 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 115 minutes in the state of 245°C and 1 Torr or less. Then, pellets of a polymer having a mass ratio of hard segment/soft segment of 33/67 (mass%) were taken out. The obtained polymer was used as a polyester elastomer of Example 2.

### Example 3

Into an autoclave, 680 g of dimethyl terephthalate (DMT manufactured by SK PetroChemical Limited), 430 g of 1,4-butanediol (1,4-BDO manufactured by Mitsubishi Chemical Group Corporation), 2330 g of biomass resource-derived polytetramethylene ether glycol (BioPTMG2000, number average molecular weight 2000, manufactured by Mitsubishi Chemical Group Corporation), 2.4 g of tetrabutyl titanate (TBT manufactured by NACALAI TESQUE, INC.), and 6.0 g of AO-330 (manufactured by ADEKA CORPORATION) were charged, and heated from room temperature to 200°C over 200 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 115 minutes in the state of 245°C and 1 Torr or less. Then, pellets of a polymer having a mass ratio of hard segment/soft segment of 17/83 (mass%) were taken out. The obtained polymer was used as a polyester elastomer of Example 3.

### Example 4

Into an autoclave, 840 g of dimethyl terephthalate (DMT manufactured by SK PetroChemical Limited), 560 g of 1,4-butanediol (1,4-BDO manufactured by Mitsubishi Chemical Group Corporation), 2150 g of biomass resource-derived polytetramethylene ether glycol (BioPTMG2000, number average molecular weight 2000, manufactured by Mitsubishi Chemical Group Corporation), 2.4 g of tetrabutyl titanate (TBT manufactured by NACALAI TESQUE, INC.), and 6.0 g of AO-330 (manufactured by ADEKA CORPORATION) were charged, and heated from room temperature to 200°C over 200 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 120 minutes in the state of 245°C and 1 Torr or less. Then, pellets of a polymer having a mass ratio of hard segment/soft segment of 24/76 (mass%) were taken out. The obtained polymer was used as a polyester elastomer of Example 4.

### Example 5

Into an autoclave, 1790 g of 2,6-naphthalendicarboxylic acid dimethyl (NDC manufactured by SK PetroChemical Limited), 1020 g of 1,4-butanediol (1,4-BDO manufactured by Mitsubishi Chemical Group Corporation), 1130 g of biomass resource-derived polytetramethylene ether glycol (BioPTMG1000, number average molecular weight 1000, manufactured by Mitsubishi Chemical Group Corporation), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 90 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 110 minutes in the state of 245°C and 1 Torr or less. Then, pellets of a polymer having a mass ratio of hard segment/soft segment of 56/44 (mass%) were taken out. The obtained polymer was used as a polyester elastomer of Example 5.

### Example 6

Into an autoclave, 1920 g of 2,6-naphthalendicarboxylic acid dimethyl (NDC manufactured by SK PetroChemical Limited), 1120 g of 1,4-butanediol (1,4-BDO manufactured by Mitsubishi Chemical Group Corporation), 960 g of biomass resource-derived polytetramethylene ether glycol (BioPTMG1000, number average molecular weight 1000, manufactured by Mitsubishi Chemical Group Corporation), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 90 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 105 minutes in the state of 245°C and 1 Torr or less. Then, pellets of a polymer having a mass ratio of hard segment/soft segment of 62/38 (mass%) were taken out. The obtained polymer was used as a polyester elastomer of Example 6.

### Reference Example 1

Into an autoclave, 2000 g of dimethyl terephthalate (DMT manufactured by SK PetroChemical Limited), 1360 g of 1,4-butanediol (1,4-BDO manufactured by Mitsubishi Chemical Group Corporation), 750 g of polytetramethylene ether glycol (PTMG1000, number average molecular weight 1000, manufactured by BASF), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 150 minutes so as to perform a transesterification reaction. Next, the can had the pressure therein gradually reduced, and was further heated so that a state of 245°C and 1 Torr or less was realized over 75 minutes so as to perform an initial condensation reaction. Further, a polymerization reaction was performed for 90 minutes in the state of 245°C and 1 Torr or less. Then, pellets of a polymer having a mass ratio of hard segment/soft segment of 72/28 (mass%) were taken out. The obtained polymer was used as a polyester elastomer of Reference Example 1.

### Reference Example 2

Into an autoclave, 1200 g of dimethyl terephthalate (DMT manufactured by SK PetroChemical Limited), 800 g of 1,4-butanediol (1,4-BDO manufactured by Mitsubishi Chemical Group Corporation), 1780 g of polytetramethylene ether glycol (PTMG1000, number average molecular weight 1000, manufactured by BASF), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 90 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 105 minutes in the state of 245°C and 1 Torr or less. Then, pellets of a polymer having a mass ratio of hard segment/soft segment of 33/67 (mass%) were taken out. The obtained polymer was used as a polyester elastomer of Reference Example 2.

### Reference Example 3

Into an autoclave, 680 g of dimethyl terephthalate (DMT manufactured by SK PetroChemical Limited), 430 g of 1,4-butanediol (1,4-BDO manufactured by Mitsubishi Chemical Group Corporation), 2330 g of polytetramethylene ether glycol (PTMG2000, number average molecular weight 2000, manufactured by BASF), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 90 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 100 minutes in the state of 245°C and 1 Torr or less. Then, pellets of a polymer having a mass ratio of hard segment/soft segment of 17/83 (mass%) were taken out. The obtained polymer was used as a polyester elastomer of Reference Example 3.

### Reference Example 4

Into an autoclave, 840 g of dimethyl terephthalate (DMT manufactured by SK PetroChemical Limited), 560 g of 1,4-butanediol (1,4-BDO manufactured by Mitsubishi Chemical Group Corporation), 2150 g of polytetramethylene ether glycol (PTMG2000, number average molecular weight 2000, manufactured by BASF), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 90 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 95 minutes in the state of 245°C and 1 Torr or less. Then, pellets of a polymer having a mass ratio of hard segment/soft segment of 24/76 (mass%) were taken out. The obtained polymer was used as a polyester elastomer of Reference Example 4.

### Reference Example 5

Into an autoclave, 1790 g of 2,6-naphthalendicarboxylic acid dimethyl (NDC manufactured by SK PetroChemical Limited), 1020 g of 1,4-butanediol (1,4-BDO manufactured by Mitsubishi Chemical Group Corporation), 1130 g of polytetramethylene ether glycol (PTMG1000, number average molecular weight 1000, manufactured by BASF), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 90 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 90 minutes in the state of 245°C and 1 Torr or less. Then, pellets of a polymer having a mass ratio of hard segment/soft segment of 56/44 (mass%) were taken out. The obtained polymer was used as a polyester elastomer of Reference Example 5.

### Reference Example 6

Into an autoclave, 1920 g of 2,6-naphthalendicarboxylic acid dimethyl (NDC manufactured by SK PetroChemical Limited), 1120 g of 1,4-butanediol (1,4-BDO manufactured by Mitsubishi Chemical Group Corporation), 960 g of polytetramethylene ether glycol (PTMG1000, number average molecular weight 1000, manufactured by BASF), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 90 minutes so as to perform a transesterification reaction. Next, the can had the pressure therein gradually reduced, and was further heated so that a state of 245°C and 1 Torr or less was realized over 90 minutes so as to perform an initial condensation reaction. Further, a polymerization reaction was performed for 85 minutes in the state of 245°C and 1 Torr or less. Then, pellets of a polymer having a mass ratio of hard segment/soft segment of 62/38 (mass%) were taken out. The obtained polymer was used as a polyester elastomer of Reference Example 6.

### Comparative Example 1

Into an autoclave, 2000 g of dimethyl terephthalate (DMT manufactured by SK PetroChemical Limited), 1360 g of 1,4-butanediol (1,4-BDO manufactured by Mitsubishi Chemical Group Corporation), 750 g of biomass resource-derived polytetramethylene ether glycol (BioPTMG1000, number average molecular weight 1000, manufactured by Mitsubishi Chemical Group Corporation), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 150 minutes so as to perform a transesterification reaction. Next, the can had the pressure therein gradually reduced, and was further heated so that a state of 245°C and 1 Torr or less was realized over 75 minutes so as to perform an initial condensation reaction. Further, a polymerization reaction was performed for 90 minutes in the state of 245°C and 1 Torr or less. Then, pellets of a polymer having a mass ratio of hard segment/soft segment of 72/28 (mass%) were taken out. The obtained polymer was used as a polyester elastomer of Comparative Example 1.

### Comparative Example 2

Into an autoclave, 2030 g of dimethyl terephthalate (DMT manufactured by SK PetroChemical Limited), 1460 g of 1,4-butanediol (1,4-BDO manufactured by Mitsubishi Chemical Group Corporation), 840 g of biomass resource-derived dimer diol (C36DiOH, Pripol2033 manufactured by Croda), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 110 minutes so as to perform a transesterification reaction. Next, the can had the pressure therein gradually reduced, and was further heated so that a state of 245°C and 1 Torr or less was realized over 75 minutes so as to perform an initial condensation reaction. Further, a polymerization reaction was performed for 55 minutes in the state of 245°C and 1 Torr or less. Then, pellets of a polymer having a mass ratio of hard segment/soft segment of 65/35 (mass%) were taken out. The obtained polymer was used as a polyester elastomer of Comparative Example 2.

### Comparative Example 3

Into an autoclave, 1815 g of dimethyl terephthalate (DMT manufactured by SK PetroChemical Limited), 1665 g of 1,4-butanediol (1,4-BDO manufactured by Mitsubishi Chemical Group Corporation), 860 g of biomass resource-derived dimer acid (C36DiCOOH, Propol1009 manufactured by Croda), 2.4 g of tetrabutyl titanate (TBT manufactured by NACALAI TESQUE, INC.), and 6.0 g of AO-330 (manufactured by ADEKA CORPORATION) were charged, and heated from room temperature to 220°C over 120 minutes so as to perform a transesterification reaction and an esterification reaction. Next, the can had the pressure therein gradually reduced, and was further heated so that a state of 245°C and 1 Torr or less was realized over 75 minutes so as to perform an initial condensation reaction. Further, a polymerization reaction was performed for 60 minutes in the state of 245°C and 1 Torr or less. Then, pellets of a polymer having a mass ratio of hard segment/soft segment of 66/34 (mass%) were taken out. The obtained polymer was used as a polyester elastomer of Comparative Example 3.

### Comparative Example 4

Into an autoclave, 2110 g of biomass resource-derived furandicarboxylic acid dimethyl (FDME manufactured by BASF), 1540 g of 1,4-butanediol (1,4-BDO manufactured by Mitsubishi Chemical Group Corporation), 1780 g of polytetramethylene ether glycol (PTMG1000, number average molecular weight 1000, manufactured by BASF), 2.4 g of tetrabutyl titanate (TBT manufactured by NACALAI TESQUE, INC.), and 6.0 g of AO-330 (manufactured by ADEKA CORPORATION) were charged, and heated from room temperature to 180°C over 120 minutes so as to perform a transesterification reaction. Next, the can had the pressure therein gradually reduced, and was further heated so that a state of 245°C and 1 Torr or less was realized over 75 minutes so as to perform an initial condensation reaction. Further, a polymerization reaction was performed for 46 minutes in the state of 245°C and 1 Torr or less. Then, pellets of a polymer having a mass ratio of hard segment/soft segment of 71/29 (mass%) were taken out. The obtained polymer was used as a polyester elastomer of

### Comparative Example 4.

Table 1 shows the composition and the evaluation results of the polyester elastomers of Examples 1 to 6, Reference Examples 1 to 6, and Comparative Examples 1 to 4.

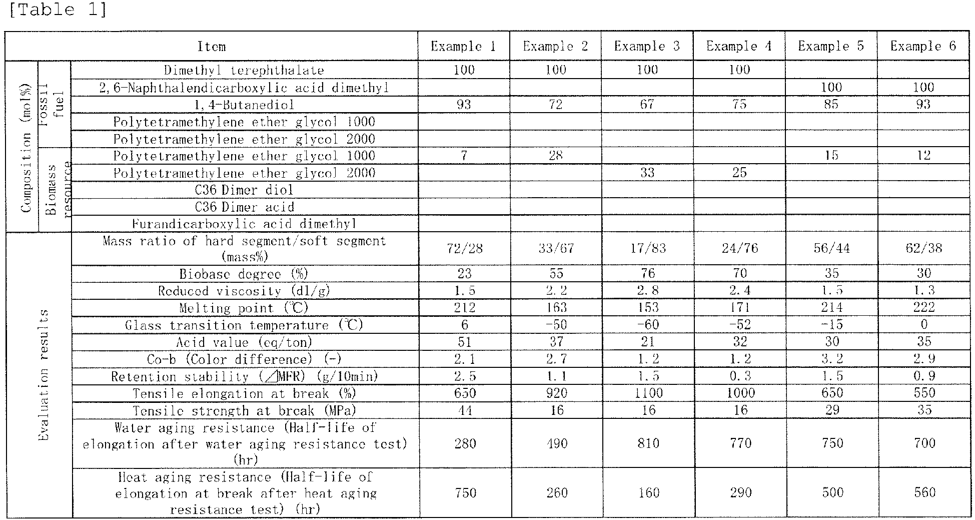

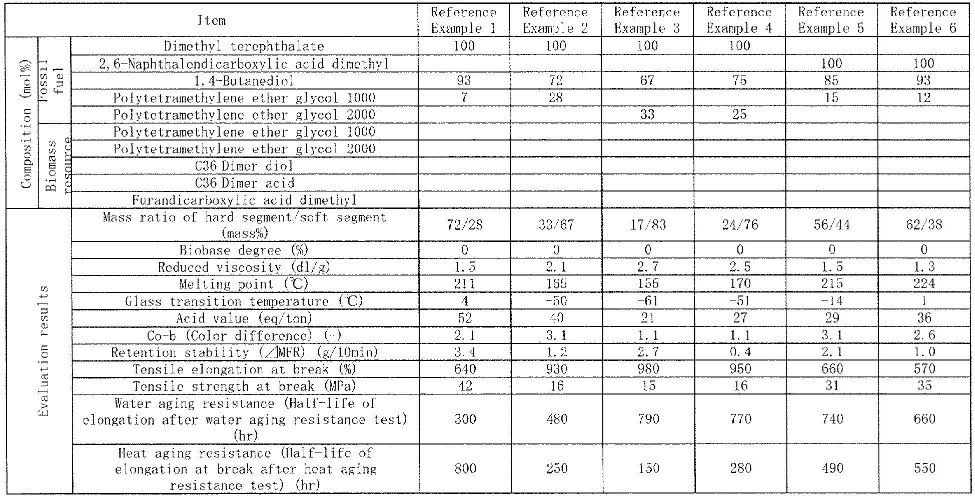

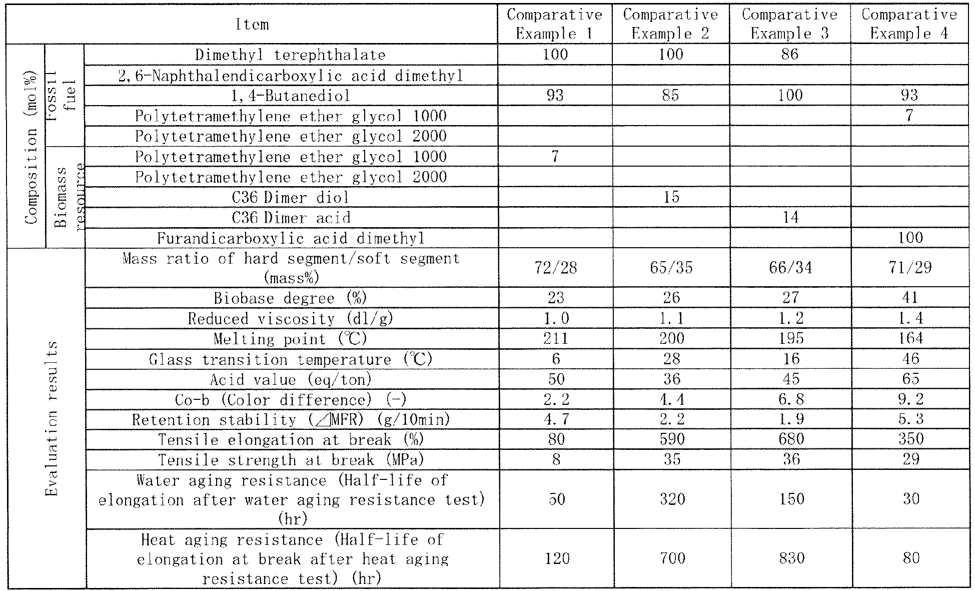

As is clear from Table 1, in all of Examples 1 to 6, a biomass resource-derived raw material was used for the aliphatic polyether of the soft segment, whereas in Reference Examples 1 to 6, only fossil fuel resource-derived raw materials of the same type were used. All of Examples 1 to 6 could retain almost as excellent flexibility, low-temperature mechanical characteristic, heat aging resistance, and water resistance as the fossil fuel resource-derived polyester elastomers of Reference Examples 1 to 6. On the other hand, Comparative Example 1 had the same composition as Example 1, but the polyester elastomer was formed by employing a conventional polycondensation time and therefore had a low reduced viscosity, and thus could not retain various excellent characteristics unique to the fossil fuel resource-derived polyester elastomers. Comparative Examples 2 to 4, in which a biomass resource-derived raw material was used for a moiety other than the aliphatic polyether of the soft segment, could not retain various excellent characteristics unique to the fossil fuel resource-derived polyester elastomers.

### Industrial Applicability

The biomass resource-derived polyester elastomer according to the present invention is not colored, and can retain excellent flexibility, low-temperature mechanical characteristic, heat resistance, and water resistance exhibited by a fossil fuel resource-derived polyester elastomer. Accordingly, the biomass resource-derived polyester elastomer according to the present invention greatly contributes to resolution of environmental problems such as a problem of depletion of fossil fuel resources, and is very useful in this field.

## Claims

1. A biomass resource-derived polyester elastomer comprising a hard segment and a soft segment bonded with each other, wherein the hard segment consists of a polyester that contains, as constituent components, an aromatic dicarboxylic acid and an aliphatic and/or alicyclic diol, and the soft segment contains, as constituent components, an aromatic dicarboxylic acid and an aliphatic polyether, wherein the aromatic dicarboxylic acid and the aliphatic and/or alicyclic diol are derived from a fossil fuel resource, and the aliphatic polyether is derived from a biomass resource, wherein the polyester elastomer has a biobase degree of 20 to 85%, and wherein the polyester elastomer has a reduced viscosity of 1.2 dl/g or more.

2. The biomass resource-derived polyester elastomer according to claim 1, wherein the aliphatic polyether that is derived from the biomass resource is polytetramethylene ether glycol.

3. The biomass resource-derived polyester elastomer according to claim 1 or 2, wherein the polyester elastomer has a glass transition temperature (Tg) of -70 to 10°C.

4. The biomass resource-derived polyester elastomer according to claim 1 or 2, wherein the polyester elastomer has a Co-b value of 7 or less.

5. The biomass resource-derived polyester elastomer according to claim 1 or 2, wherein the polyester elastomer has a biobase degree of 35 to 85%, and wherein the polyester elastomer has a reduced viscosity of 1.8 dl/g or more.

6. The biomass resource-derived polyester elastomer according to claim 1 or 2, wherein the hard segment of the polyester elastomer is a polyester consisting of a butylene terephthalate unit.
